# EUROPÄISCHE PATENTSCHRIFT

(11) **EP 2 373 512 B1**
(45) Veröffentlichungstag und Bekanntmachung des Hinweises auf die Patenterteilung: **20.02.2013**
(21) Anmeldenummer: 09763963.7
(22) Anmeldetag: 03.12.2009
(51) Int. Cl.: B60K 15/035

(54) **TANKENTLÜFTUNGSSYSTEM**
TANK VENTILATION SYSTEM
SYSTÈME DE MISE À L'AIR DE RÉSERVOIR

(30) Priorität: 04.12.2008 DE 102008060248
(43) Veröffentlichungstag der Anmeldung: 12.10.2011
(73) Patentinhaber: Continental Automotive GmbH, 30165 Hannover (DE)
(72) Erfinder: BIERL, Rudolf, 93055 Regensburg (DE); HEINRICH, Stephan, 84076 Pfeffenhausen (DE); WILDGEN, Andreas, 93152 Nittendorf (DE)
(86) Internationale Anmeldenummer: PCT/EP2009/066293
(87) Internationale Veröffentlichungsnummer: WO 2010/063787

(56) Entgegenhaltungen:
- GB-A- 2 285 972
- US-A- 5 816 222
- US-A- 5 873 352
- US-A- 5 925 817
- US-A1- 2007 157 908
- US-A1- 2007 227 514

## Beschreibung

Die Erfindung betrifft ein Tankentlüftungssystem. Beim Betrieb einer Brennkraftmaschine entfällt ein Großteil der emittierten Schadstoffe auf verbrennungsbedingt entstehendes Abgas. Darüber hinaus gibt es andere Quellen, die für Schadstoffemissionen verantwortlich sind. Zu diesen Quellen können beispielsweise Ausdünstungen eines Kraftstofftanks der Brennkraftmaschine gezählt werden.

Kraftstoffe wie beispielsweise Superbenzin, die in dem Kraftstofftank gelagert sein können, weisen eine Reihe von leicht-flüchtigen Kohlenwasserstoffen auf. Hierzu zählen beispielsweise Methan, Butan und Propan. Um den Kraftstofftank bei einer Änderung eines Volumens des Kraftstoffs vor mechanischen Schäden zu schützen und einen Druckausgleich zwischen dem Kraftstofftank und der Umluft zu ermöglichen, kann der Kraftstofftank über eine Leitung mit der Umluft gekoppelt sein. Die leicht-flüchtigen Kohlenwasserstoffe können sich insbesondere bei erhöhten Außentemperaturen, beispielsweise durch Sonneneinstrahlung, oder auch durch ein Schütteln des Kraftstofftanks während einer Fahrt aus dem Kraftstoff lösen und als gasförmige Bestandteile den Kraftstofftank über die Leitung verlassen.

Aus der gattungsgemäßen US 5,873,352 A ist eine Vorrichtung zum Diagnostizieren eines Fehlers in einem Tankentlüftungssystem einer Brennkraftmaschine bekannt. Das Tankentlüftungssystem umfasst einen Aktivkohlefilter 10, 11, der mit einem Tank 20 gekoppelt ist. Der Aktivkohlefilter ist über eine Spülleitung mit einem Ansaugrohr der Brennkraftmaschine gekoppelt. Ein Spüldampfkonzentrationssensor ist stromaufwärts eines Vakuumschaltventils in der Spülleitung angeordnet zum Ausgeben eines elektrischen Signals korrespondierend zu der Dampfkonzentration in der Spülleitung.

Auch US 2007/0227514 A1 und US 2007/0157908 A1 offenbaren Tankentlüftungssysteme. Ferner offenbart auch GB 2285972 A ein Tankentlüftungssystem für eine Brennkraftmaschine.

Die Aufgabe, die der Erfindung zugrunde liegt, ist, ein Tankentlüftungssystem zu schaffen, das eine zuverlässige Entlüftung des Tanks und eine präzise Emission einer vorgegebenen Menge an Schadstoffen aus dem Tankentlüftungssystem ermöglicht.

Die Aufgabe wird gelöst durch die Merkmale des unabhängigen Anspruchs. Vorteilhafte Ausgestaltungen der Erfindung sind in den Unteransprüchen angegeben.

Die Erfindung zeichnet sich aus durch ein Tankentlüftungssystem mit einer Spülleitung, von der ein Bypass abzweigt und in die der Bypass mündet. Ein Sensor ist in dem Bypass der Spülleitung angeordnet und ausgebildet zum Ermitteln der Konzentration von Kohlenwasserstoffen eines Fluids in der Spülleitung. Ein Kohlenwasserstoffspeicher ist an einem ersten Anschluss gekoppelt mit einem ersten Ende der Spülleitung und ausgebildet zur Kopplung über einen zweiten Anschluss mit einem Tank. Die Anordnung des Sensors in dem Bypass ermöglicht eine präzise und zuverlässige Ermittlung der Konzentration von Kohlenwasserstoff des Fluids in der Spülleitung. Dies kann zu einer Verringerung von Schadstoffemissionen bei einem Einsatz des Tankentlüftungssystems in einer Brennkraftmaschine führen, wenn das den Tank entlüftende Fluid über den Ansaugtrakt dem Motor der Brennkraftmaschine zugemessen wird und die Dosierung eines Kraftstoffs durch eine präzise Ermittlung der Konzentration an Kohlenwasserstoff in dem Fluid präzise vorgegeben werden kann.

In einer bevorzugten Ausführungsform ist der Bypass der Spülleitung U-förmig ausgebildet. Dies ermöglicht eine laminare Strömung des Fluids in einem Bereich des Sensors, was zu präzisen und zuverlässigen Messergebnissen des Sensors führt. Ferner können durch diese Ausgestaltungen des Bypasses wirkungsvoll Partikel von dem Sensor ferngehalten werden, was einer möglichen Beschädigung des Sensors und auch einer Beeinflussung von Messergebnissen wirksam entgegenwirkt.

Gemäß einer weiteren vorteilhaften Ausgestaltung weist die Spülleitung an einem zweiten Ende ein Ventil auf. Dies ermöglicht ein zuverlässiges Entlüften des Tanks.

Ausführungsbeispiele der Erfindung sind im Folgenden anhand der schematischen Zeichnungen näher erläutert. Es zeigen:
- Figur 1: eine Brennkraftmaschine mit einem Tankentlüftungssystem,
- Figur 2: den Querschnitt eines Sensorgehäuses,
- Figur 3: das Sensorgehäuse.

Elemente gleicher Konstruktion oder Funktion sind figuren-übergreifend mit den gleichen Bezugszeichen gekennzeichnet.

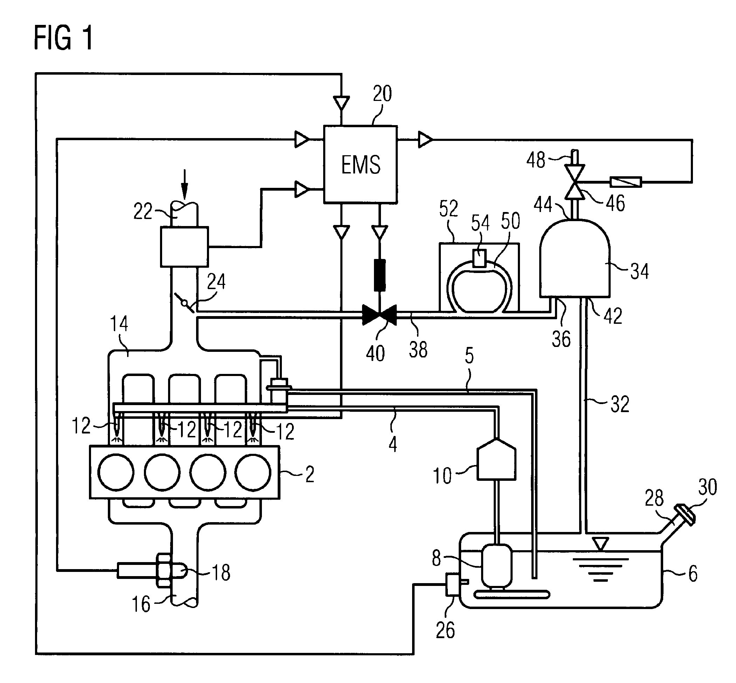

Figur 1 zeigt eine Brennkraftmaschine mit einem Motorblock 2, der durch eine Kraftstoffzuleitung 4 und eine Rückflussleitung 5 hydraulisch mit einem Tank 6 gekoppelt ist. Bei dem Tank 6 kann es sich beispielsweise um einen Kraftstofftank handeln. In dem Tank 6 ist eine Kraftstofffördereinheit 8 angeordnet, die Kraftstoff über die Kraftstoffzuleitung 4 und einen in der Kraftstoffzuleitung 4 angeordneten Filter 10 zu Einspritzventilen 12 leitet, die an dem Motorblock 2 angeordnet sind. Von den Einspritzventilen 12 wird der zugeführte Kraftstoff in den Motorblock 2 zugemessen, wo er zusammen mit Luft, die mittels eines Ansaugtrakts 14 in einem vorgegebenen Verhältnis zu dem Kraftstoff zugemessen wird, zur Verbrennung kommt. Entstehende Abgase des Verbrennungsprozesses werden durch einen Abgastrakt 16 von dem Motorblock 2 weggeführt. In dem Abgastrakt 16 ist eine Lambdasonde 18 angeordnet, die dazu ausgebildet ist ein Messsignal zu erzeugen, das repräsentativ ist für ein Luft/Kraftstoff-Verhältnis vor der Verbrennung. Die Lambdasonde 18 ist elektrisch gekoppelt mit einer Steuervorrichtung 20 und so bevorzugt Teil einer Lambdaregelung. Die Steuervorrichtung 20 kann beispielsweise als Motorsteuergerät ausgebildet sein. Dem Ansaugtakt 14 wird die Luft über einen Lufteinlass 22 zugeführt, in dem eine Drosselklappe 24 angeordnet ist.

In dem Tank 6 ist ferner ein Kraftstoffsensor 26 angeordnet. Bei dem Kraftstoffsensor 26 kann es sich beispielsweise um einen so genannten Flex-Fuel-Sensor handeln, mittels dem eine Zusammensetzung des Kraftstoffs ermittelt werden kann. Aus dem Kraftstoff können, insbesondere bei erhöhten Umgebungstemperaturen, leicht-flüchtige Kohlenwasserstoffe abdampfen. Hierdurch entsteht in dem Tank 6 ein mit Kohlenwasserstoffen angereichertes Luft/Kraftstoff-Gemisch, welches im Folgenden als Fluid F bezeichnet wird.

Der Tank 6 weist einen Einfüllstutzen 28 auf, an dessen Ende er mit einem Tankverschluss 30 hermetisch nach außen abgeschlossen ist. Bei einem Betrieb der Brennkraftmaschine kann sich das Volumen des in dem Tank 6 gespeicherten Kraftstoffs verringern, beispielsweise durch Entnahme von Kraftstoff mittels der Kraftstofffördereinheit 8. Es ist beispielsweise auch eine Vergrößerung des Kraftstoffvolumens in dem Tank 6 möglich, beispielsweise durch temperaturbedingte Ausdehnungen des Kraftstoffs bei hohen Außentemperaturen und längeren Stillstandszeiten der Brennkraftmaschine. Um einer Beschädigung des Tanks 6 wirksam entgegenzuwirken, ist der Tank 6 für einen Druckausgleich zwischen dem Tank 6 und der Umluft bei einer Volumenänderung des Tankinhaltes mit einer Lüftungsleitung 32 gekoppelt. Kommt es zu Volumenänderungen des Tankinhaltes, dann kann das mit Kohlenwasserstoffen angereicherte Fluid F in die Lüftungsleitung 32 gelangen. Es ist beispielsweise auch möglich, dass Kraftstoff in die Lüftungsleitung 32 gelangt, beispielsweise aufgrund von Erschütterungen eines Fahrzeugs, in dem die Brennkraftmaschine mit dem Tank 6 angeordnet ist. In diesem Fall ist der Anteil an Kohlenwasserstoff in dem Fluid F besonders groß.

Zur Filterung der in dem Fluid F enthaltenen Kohlenwasserstoffe weist die Brennkraftmaschine einen Kohlenwasserstoffspeicher 34 auf. Der Kohlenwasserstoffspeicher 34 kann beispielsweise als Aktivkohlefilter ausgebildet sein und ist dazu ausgebildet Kohlenwasserstoffe zu absorbieren und zu speichern. Der Kohlenwasserstoffspeicher 34 weist drei Anschlüsse auf. Ein erster Anschluss 36 ist mit einer Spülleitung 38 gekoppelt, die mit einem Ventil 40 und über das Ventil 40 mit dem Ansaugtrakt 14 gekoppelt ist. Das Ventil 40 ist elektrisch mit der Steuervorrichtung 20 gekoppelt, von der es angesteuert werden kann. Über einen zweiten Anschluss 42 und die Lüftungsleitung 32 ist der Kohlenwasserstoffspeicher 34 mit dem Tank 6 gekoppelt. Ein dritter Anschluss 44 koppelt den Kohlenwasserstoffspeicher 34 über ein Spülventil 46 mit einem Spüllufteinlass 48. Das Spülventil 46 ist mit der Steuervorrichtung 20 elektrisch gekoppelt und kann von der Steuervorrichtung 20 angesteuert werden.

Die zwischen dem ersten Anschluss 36 des Kohlenwasserstoffspeichers 34 und dem Ventil 40 angeordnete Spülleitung 38 weist einen Bypass 50 auf, der in einem Sensorgehäuse 52 angeordnet ist. Der Bypass 50 zweigt von der Spülleitung 38 ab und mündet wieder in die Spülleitung 38. In dem Bypass 50 ist ein Sensor 54 angeordnet, der ausgebildet ist zum Ermitteln einer Konzentration von Kohlenwasserstoff cHC in der Spülleitung 38.

Das Absorptionsvermögen des Kohlenwasserstoffspeichers 34 bezüglich der Kohlenwasserstoffe ist begrenzt. Gelangt der Kohlenwasserstoffspeicher 34 in eine Sättigung, so wird er gespült. Hierzu werden das Spülventil 46 und das Ventil 40 geöffnet, so dass über den Spüllufteinlass 48 und das Spülventil 46 Umluft in den Kohlenwasserstoffspeicher 34 gelangt, die die in dem Kohlenwasserstoffspeicher 34 gespeicherten Kohlenwasserstoffe aufnimmt und über die Spülleitung 38 und das Ventil 40 dem Ansaugtrakt 14 der Brennkraftmaschine zumisst. Das Spülventil 46 und das Ventil 40 können hierfür von der Steuervorrichtung 20 angesteuert werden.

Zur Reduktion von Schadstoffen der Brennkraftmaschine und auch für eine Leistungsoptimierung wird das Luft/KraftstoffVerhältnis des Luft/Kraftstoff-Gemisches vorgegeben. Das mit Kohlenwasserstoff aus dem Kohlenwasserstoffspeicher 34 angereicherte Fluid F gelangt über das Ventil 40 in den Ansaugtrakt 14, wo es das Luft/Kraftstoff-Gemisch in seiner Zusammensetzung bezüglich des Kohlenwasserstoffanteils beeinflussen kann. Um das Luft/Kraftstoff-Verhältnis präzise vorgeben zu können, wird eine Kohlenwasserstoffkonzentration cHC des mit Kohlenwasserstoffen angereicherten Fluids F mittels des Sensors 54 erfasst. Für eine bekannte Kohlenwasserstoffkonzentration cHC des Fluids F können dann die Zufuhr der Luft aus dem Lufteinlass 22 und des Kraftstoffs entsprechend angepasst werden. Es kann beispielsweise auch der Massenstrom des mit Kohlenwasserstoffen angereicherten Fluids F mittels des Ventils 40 gesteuert werden, beispielsweise mittels der Steuervorrichtung 20.

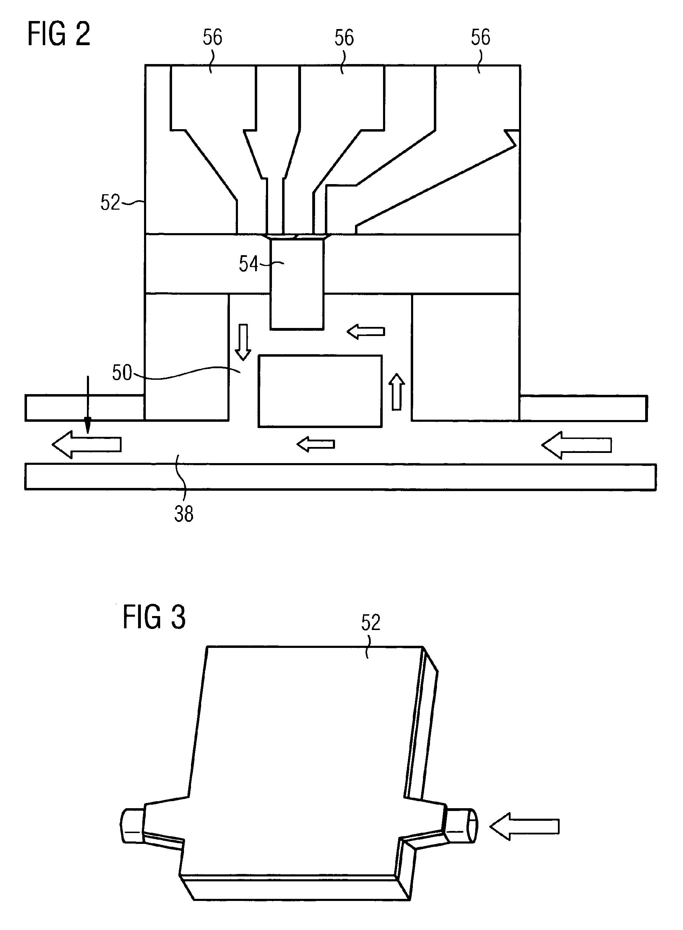

Figur 2 zeigt das Sensorgehäuse 52, welches mit der Spülleitung gekoppelt ist und in dem der Bypass 50 von der Spülleitung 38 abzweigt und wieder in diese mündet. Der Sensor 54 ist teilweise in dem Bypass angeordnet. Der Sensor 54 ist elektrisch gekoppelt mit einer Auswerteelektronik über elektrische Kontakte 56. Ein Strömungsverhalten des Fluids F in der Spülleitung 38 und in dem Bypass 50 ist schematisch eingezeichnet.

In einer bevorzugten Ausführungsform ist die Auswerteelektronik hydraulisch und pneumatisch von dem Bypass 50 entkoppelt. In einer weiteren bevorzugten Ausführungsform ist der Bypass 50 U-förmig ausgebildet. Dies ermöglicht eine laminare Strömungsführung des Fluids F in einem Bereich des Sensors 54. Durch die Ausbildung des Bypasses 50 werden Wasser- und Schmutzpartikel von dem Sensor 54 ferngehalten, so dass einer Beschädigung sowie einer Verfälschung von Messergebnissen des Sensors 54 wirksam entgegengewirkt werden kann.

Figur 3 zeigt das Sensorgehäuse 52, in dem der Bypass 50 und der Sensor 54 angeordnet sind.

## Patentansprüche

1. Tankentlüftungssystem, mit
- einer Spülleitung (38),
- einem Sensor (54), zum Ermitteln der Konzentration von Kohlenwasserstoffen eines Fluids (F) in der Spülleitung (38),
- einem Kohlenwasserstoffspeicher (34), der an einen ersten Anschluss (36) gekoppelt ist mit einem ersten Ende der Spülleitung (38) und ausgebildet ist zur Kopplung über einen zweiten Anschluss (42) mit einem Tank (6), **dadurch gekennzeichnet, dass** von der Spülleitung (38) ein Bypass (50) abzweigt und in die der Bypass (50) mündet, und dass der Sensor (54) in dem Bypass (50) der Spülleitung (38) angeordnet und ausgebildet ist.

2. Tankentlüftungssystem nach Anspruch 1, bei dem der Bypass (50) der Spülleitung (38) U-förmig ausgebildet ist.

3. Tankentlüftungssystem nach einem der vorstehenden Ansprüche, bei dem die Spülleitung (38) an einem zweiten Ende ein Ventil (40) aufweist.

## Claims

1. Tank ventilation system, having
- a purge line (38),
- a sensor (54) to determine the concentration of hydrocarbons in a fluid (F) in the purge line (38),
- a hydrocarbon storage device (34), which is coupled at a first connection (36) to a first end of the purge line (38) and is designed for coupling, via a second connection (42), to a tank (6), **characterized in that** a bypass (50) branches off the purge line (38) and the bypass (50) opens into it, and **in that** the sensor (54) is arranged and formed in the bypass (50) of the purge line (38).

2. Tank ventilation system according to Claim 1, in which the bypass (50) of the purge line (38) is of U-shaped design.

3. Tank ventilation system according to one of the preceding claims, in which the purge line (38) has a valve (40) at a second end.

## Revendications

1. Système de mise à l'atmosphère d'un réservoir, comprenant
- un conduit (38) de lavage,
- un capteur (54) de détermination de la concentration d'hydrocarbures d'un fluide (F) dans le conduit (8) de lavage,
- une réserve (34) d'hydrocarbures, qui, en un premier raccord (36), est reliée à une première extrémité du conduit (38) de lavage et qui est constituée, pour être reliée à un réservoir (6), par un deuxième raccord (42),
**caractérisé en ce qu'**une dérivation (50) bifurque du conduit (38) de lavage et y débouche et **en ce que** le capteur (54) est monté et constitué dans la dérivation (50) du conduit (38) de lavage.

2. Système de mise à l'atmosphère d'un réservoir suivant la revendication 1, dans lequel la dérivation (50) du conduit (38) de lavage est en forme de U.

3. Système de mise à l'atmosphère d'un réservoir suivant l'une des revendications précédentes, dans lequel le conduit (38) de lavage a une vanne (40) à une seconde extrémité.
